Europäisches Patentamt

European Patent Office

Office européen des brevets

(19)

(11) Publication number: **0 227 138 B1**

# EUROPEAN PATENT SPECIFICATION

(12)

(45) Date of publication of patent specification: **08.05.91**

(51) Int. Cl.⁵: **G01H 1/00,** G01M 13/04, G07C 3/00

(21) Application number: **86202040.1**

(22) Date of filing: **18.11.86**

(54) **Means for detecting faults or defects in moving machine parts.**

(30) Priority: **28.11.85 NL 8503294**

(43) Date of publication of application:
**01.07.87 Bulletin 87/27**

(45) Publication of the grant of the patent:
**08.05.91 Bulletin 91/19**

(84) Designated Contracting States:
**DE FR GB IT NL SE**

(56) References cited:
DE-B- 1 077 444    GB-A- 1 514 792
GB-A- 1 603 190    GB-A- 2 104 658
GB-A- 2 136 125    US-A- 3 971 249
US-A- 4 011 472    US-A- 4 419 897

(73) Proprietor: **SKF Industrial Trading & Development Co, B.V.**
**Kelvinbaan 16**
**NL-3439 MT Nieuwegein(NL)**

(72) Inventor: **Vermeiren, Karel Nathalis**
**Jasmijnlaan 7**
**Woerden(NL)**
Inventor: **Smulders, Adrianus Josephus**
**Hamseweg 117**
**Amersfoort(NL)**

(74) Representative: **Merkelbach, B.**
**SKF Engineering & Research Centre B.V.**
**P.O. Box 2350**
**NL-3430 DT Nieuwegein(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to means for detecting faults or defects in rotating machine parts comprising a transducer that converts the mechanical vibrations produced by a fault or defect into an electrical signal, and a processing circuit that as a function of this signal emits an output signal which indicates the condition of the machine part.

Such a means or detection system is disclosed e.g. in the British patent application GB-A-2104658. In the known systems use is made of the resonance peak of the transducer to improve the selectivity and amplification. In practice, however, the problem arises that when the machine is measured by mechanical vibrations the resonance frequents and the second and third harmonics thereof are also measured. Thus the mechanical amplification of given frequency bands in a machine part on which the measurement is being made may be greater than the mechanical amplification of the transducer. The known means or system is accordingly sensitive to disturbance signals owing to which reliable detection is not really possible.

The object of the invention is to procure a means or system of the kind mentioned before wherein these disadvantages are avoided in a simple but nevertheless effective way. Thereto, the means pursuant to the invention is characterised in that the transducer is designed as an acoustic-emission transducer with great width and the processing circuit selects a frequency range in the transducer signal where the half wave-length is smaller than the cross section of the transducer, said processing circuit is provided with a multiplier to the inputs of which are connected an oscillator with a frequency of at least 100 kHz and a band-pass filter with a central frequency corresponding to the oscillation frequency, while the transducer is connected with the input of the band-pass filter and a low-pass filter is connected to the output of the multiplier, whereby the output signals of said low-pass filter are supplied to comparators which outputs are processed in counters, of which the clock inputs are connected to an oscillator unit, the positions of said counters are added to an addition member to which a time clock is connected, the total value of said member is divided by a member which value is converted by a converter and controlled by a monitoring member to which an alarm member is connected.

In this way a means is obtained wherein the transducer may without any problems be mounted at any desired location on the machine on which a measurement must be made. In a practical size of the transducer, the frequency range will lie at a frequency at least twice as high as the frequency range of 50 kHz, so that hindrance from the resonance frequencies lying in this last-mentioned frequency range and the second and third harmonics thereof is no longer experienced.

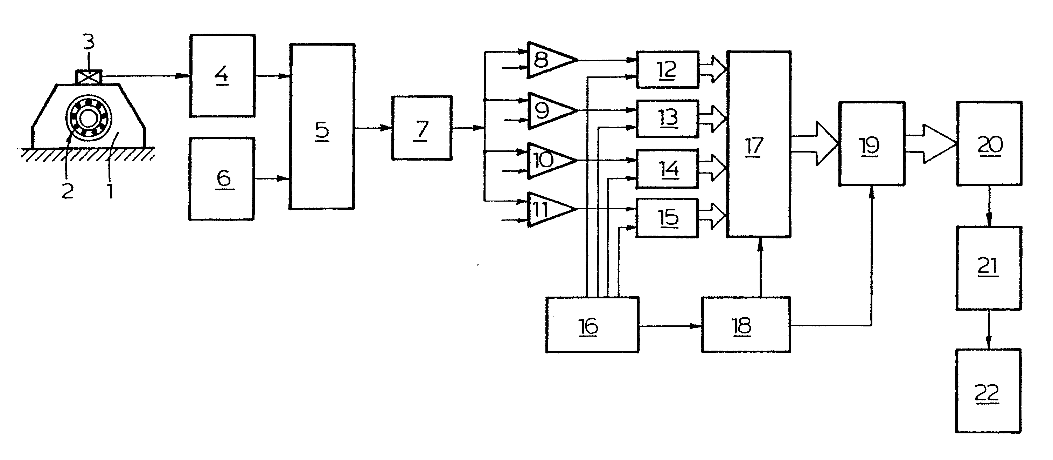

The invention is explained in detail below with the aid of the drawing, wherein an exemplified embodiment is schematically represented.

A machine 1, indicated schematically, is provided with a bearing 2 which must be checked for faults or defects. For this purpose a transducer 3 with great band width, sensitive to acoustic emission, is mounted on the machine 1, which transducer converts the mechanical vibrations of the machine into an electrical signal. Mechanical vibrations are produced, for example, when a defect in the track of the inner or outer race is contacted by the balls of the bearing 2.

The transducer 3 is connected to an amplifier 4 with a band-pass filter. The amplifier 4 is connected to a first input of a multiplier 5, the second input of which receives the output signal of an oscillator 6. The central frequency of the band-pass filter of the amplifier 4 corresponds to the oscillation frequency of the oscillator 6. A suitable commercially available oscillator has an oscillation frequency of 455 kHz. The output of the multiplier 5 is connected with a low-pass filter 7 having a band width of, for example, 3 kHz. The output signal of the low-pass filter 7 then corresponds to the frequency range of 452-458 kHz in the output signal of the transducer 3. The presence of a defect in the bearing 2 then appears in an amplitude increase in the output signal of the low-pass filter 7.

The means described has the important advantage that a frequency range in a relatively high frequency is used, in which frequency range disturbing mechanical resonance frequencies of the bearing 2 and second and third harmonics thereof are no longer present. In addition, the wavelength at this frequency is approximately 12 mm, while the transducer 3 has a greater diameter, so that a maximum of a standing wave will always appear in the contact surface of the transducer 3.

In the example represented of the means pursuant to the invention the output signal of the low-pass filter 7 is supplied to four comparators 8-11, which compare this output signal with a higher threshold value in each instance. The outputs of the comparators 8-11 are connected to the port input of associated counters 12-15, the clock inputs of which are connected to an oscillator unit 16. The oscillator unit 16 supplies four unlike frequencies 1, 2, 4 and 8 MHz respectively. The counter that receives the clock signal with the lowest frequency is connected by its port input to the comparator with the lowest threshold value, while the counter that receives the clock signal with the highest frequency is connected to the comparator with the highest threshold value. This ensures that the higher amplitudes in the output signal of the low-pass filter 7 are weighed more heavily than the lower amplitudes. The positions of the counters 12-15 that are reached after a fixed time interval are added up by an addition member 17. The time interval is determined by a time clock 18, the time interval being adjustable, for example, to 1, 2, 4 and 6 s. In order to obtain a uniform scale, the total value of the addition member 17 is divided by means of a division member 19 by the time interval selected. The value thus obtained may be converted by means of a digital/analog converter 20 into an analog voltage, which is controlled by means of a monitoring member 21 that prevents a given value from being exceeded. If an impermissible condition is established by the monitoring member 21, the latter emits an output signal to an alarm member 22.

It is noted that the band-pass filter in the amplifier 4 is used for override of the multiplier 5 by avoiding low frequencies. The pass band of the filter may, for example, by 355-555 kHz.

When samples are taken, very good test results have been obtained with the means described, where it was possible to establish defects in the bearing 2 down to a minimum size of 0.25 mm under a variety of circumstances.

It is noted that the method and means described may be used not only for detecting faults or defects in a bearing, but alternatively, for example, for checking cutting tools for fracture or the like.

The invention is therefore not limited to the example described above, which may be varied in different ways within the scope of the claims.

## Claims

1. Means for detecting faults or defects in rotating machine parts comprising a transducer (3) that converts the mechanical vibrations produced by a fault or defect into an electrical signal, and a processing circuit (4-7) that as a function of this signal emits an output signal which indicates the condition of the machine part, characterized in that the transducer (3) is designed as an acoustic-emission transducer with great width and the processing circuit (4-7) selects a frequency range in the transducer signal where the half wavelength is smaller than the cross section of the transducer, said processing circuit is provided with a multiplier (5) to the inputs of which are connected an oscillator (6) with a frequency of at least 100 kHz and a band-pass filter (4) with a central frequency corresponding to the oscillation frequency, while the transducer (3) is connected with the input of the band-pass filter (4) and a low-pass filter (7) is connected to the output of the multiplier (5), whereby the output signals of said low-pass filter (7) are supplied to comparators (8-11) which outputs are processed in counters (12-15), of which the clock inputs are connected to an oscillator unit (16), the positions of said counters (12-15) are added to an addition member (17) to which a time clock (18) is connected, the total value of said member (17) is divided by a division member (19) which value is converted by a converter (20) and controlled by a monitoring member (21) to which an alarm member is connected.

2. Means according to claim 1, characterized in that the frequency range selected lies above 100 kHz, approximately 452-458 kHz.

## Revendications

1. Moyens pour détecter des défauts ou des défectuosités dans des pièces de machines tournantes comportant un transducteur (3) qui convertit les vibrations mécaniques produites par un défaut ou une défectuosité en un signal électrique, et un circuit de traitement (4 à 7) qui, en fonction de ce signal, émet un signal de sortie qui indique l'état de la pièce de machine, caractérisés en ce que le transducteur (3) est conçu comme un transducteur à émission acoustique avec une grande largeur et en ce que le circuit de traitement (4 à 7) sélectionne une plage de fréquences dans le signal de transducteur où la demi-longueur d'onde est inférieure à la section transversale du transducteur, ledit circuit de traitement étant pourvu d'un multiplicateur (5) sur les entrées duquel sont connectés un oscillateur (6) avec une fréquence d'au moins 100 kHz et un filtre passe-bande (4) avec une fréquence centrale correspondant à la fréquence d'oscillation, tandis que le transducteur (3) est connecté à l'entrée du filtre passe-bande (4) et qu'un filtre passe-bas (7) est connecté à la sortie du multiplicateur (5), dans lesquels les signaux de sortie dudit filtre passe-bas (7) sont délivrés à des comparateurs (8 à 11) dont les sorties sont traitées dans des compteurs (12 à 15), dont les entrées d'horloge sont connectées à une unité d'oscillateur (16), les positions desdits compteurs (12 à 15) étant ajoutées à un élément d'addition (17) auquel est connectée une horloge de minutage (18), la valeur total dudit élément (17) étant divisée par un élément de division (19) dont la valeur est convertie par un convertisseur (20) et contrôlée par un élément de contrôle (21) auquel est connecté un élément d'alarme.

2. Moyens selon la revendication 1, caractérisés en ce que la plage de fréquences sélectionnée se trouve audessusde 100 kHz, approximativement entre 452 et 458 kHz.

**Ansprüche**

1. Mittel zum Erfassen von Fehlern und Defekten in sich bewegenden Maschinenteilen mit einem Wandler (3), der durch einen Fehler oder Defekt hervorgerufene mechanische Vibrationen in ein elektrisches Signal umwandelt, und einer Verarbeitungsschaltung (4-7), die in Abhängigkeit von dem Signal ein Ausgangssignal aussendet, welches den Zustand des Maschinenteils anzeigt, dadurch gekennzeichnet, daß der Wandler (3) als Schall-Emissions-Wandler großer Breite ausgebildet ist und die Verarbeitungsschaltung (4-7) einen Frequenzbereich in dem Wandlersignal auswählt, in dem die halbe Wellenlänge kleiner ist als der Querschnitt des Wandlers, wobei die Verarbeitungsschaltung einen Multiplikator (5) aufweist, dessen Eingänge mit einem Oszillator (6) mit einer Frequenz von wenigstens 100 kHz und einem Bandpassfilter (4) mit einer zentralen, mit der Oszilationsfrequenz korrespondierenden Frequenz verbunden sind, während der Wandler (3) mit dem Eingang des Bandpassfilters (4) und ein Tiefpassfilter (7) mit dem Ausgang des Multiplikators (5) verbunden ist, wobei die Ausgangssignale des Tiefpassfilters (7) Komparatoren (12-15) zugeführt werden, deren Ausgänge in Zählern (12-15) verarbeitet werden, deren Clockeingänge wiederum mit einer Oszillatoreinheit (16) verbunden sind, wobei die Werte der Zähler (12-15) in einem Additionsglied (17) addiert werden, mit dem ein Zeitgeber (18) verbunden ist, wobei der Gesamtwert des Gliedes (17) durch ein Divisionsglied (19) geteilt wird und der Wert durch einen Konverter (20) umgewandelt und durch ein Überwachungsglied ( 21) gesteuert wird, mit dem wiederum ein Alarmglied verbunden ist.

2. Mittel nach Anspruch 1, dadurch gekennzeichnet, daß der ausgewählte Frequenzbereich über 100 kHz, etwa bei 452 - 458 kHz liegt.